# EUROPÄISCHE PATENTSCHRIFT

(11) **EP 1 983 131 B1**
(45) Veröffentlichungstag und Bekanntmachung des Hinweises auf die Patenterteilung: **17.10.2012**
(21) Anmeldenummer: 08006122.9
(22) Anmeldetag: 28.03.2008
(51) Int. Cl.: E05C 9/04, E05B 5/00, F24C 15/02

(54) **Vorrichtung zum Verriegeln einer Tür eines Aufwärmgerätes in Küchen von Flugzeugen**
Device for sealing a door of a heating device in aircraft kitchens
Dispositif de verrouillage d'une porte d'un appareil de réchauffage dans des cuisines d'avions

(30) Priorität: 17.04.2007 DE 102007018011
(43) Veröffentlichungstag der Anmeldung: 22.10.2008
(73) Patentinhaber: Sell Gmbh, 35745 Herborn (DE)
(72) Erfinder: Wagner, Stefan, 35315 Homberg (DE); Derenek, Walter, 35745 Herborn (DE)
(74) Vertreter: Grosse, Wolf-Dietrich Rüdiger

(56) Entgegenhaltungen:
- EP-A1- 0 893 060
- WO-A1-2005/010439
- US-S1- D 463 214

## Beschreibung

Die Erfindung betrifft eine Vorrichtung zum Verriegeln einer Tür eines Aufwärmgerätes, wie von Öfen, in Küchen von Flugzeugen, bei der von Hand betätigt Verriegelungsköpfe in Fallen des Gerätegehäuses einschnappen und eine zweite Sicherheitsverriegelung vorgesehen ist, wie beispielsweise aus den Druckschriften WO 2005/010439 A und US D463 214 5 bekannt.

Bei im Flugbetrieb zum Einsatz kommenden Aufwärmgeräten, in denen Speisen oder Backwaren, wie Brötchen, Baguettes oder dergleichen, erhitzt und/oder aufgebacken werden, sind Verriegelungen der eingangs genannten Art mit einem in der Tür ausgebildeten oberen und unteren Verriegelungskopf bekannt. Damit eine doppelte Sicherheit gewährleistet werden kann, die wegen der im Flugbetrieb insbesondere hohen Anforderungen gefordert wird, wird bei den bekannten Aufwärmgeräten bzw. Öfen durch eine zweite manuelle Betätigung mittels eines Handknebels zusätzlich ein Drehverschluss in eine Verriegelungslage gebracht.

Da beide Verriegelungen unabhängig voneinander funktionieren müssen und auch einzeln auf statische Belastung getestet werden, muss bei den existierenden Aufwärmgeräten mit einem Knebel bzw. Drehverschluss als Zweitverriegelung die Tür biegesteifer ausgelegt werden, womit sie entsprechend schwerer wird. Für das Verschließen der Tür und deren endgültige Verriegelung bzw. umgekehrt Entriegelung durch Rotation des Drehverschlusses sind Handbetätigungen in voneinander abweichenden Bewegungsrichtungen notwendig.

Der Erfindung liegt daher die Aufgabe zugrunde, eine gattungsgemäße Vorrichtung zu schaffen, die beim Ver- und Entriegeln eine einfachere Handhabung ermöglicht, dabei eine noch größere Verriegelungssicherheit bietet und eine gewichtsoptimierte Bauweise erlaubt.

Diese Aufgabe wird erfindungsgemäß dadurch gelöst, dass an der freien, aufschwingenden Seite der Tür in deren Längserstreckung im Türinneren ein jeweils aus zwei parallel nebeneinander verlaufenden Einzelgestängen bestehendes, oberes und unteres Doppelgestänge mit an den außen liegenden Enden der Einzelgestänge angeordneten, oben und unten aus der Tür hervorragenden Riegelköpfen ausgebildet ist, wobei jedem Doppelgestänge an den von den Riegelköpfen entfernten Enden zentral in der Türfront ein Handgriff zugeordnet ist, die über Bewegungskopplungs- und -umlenkungsglieder mit den Doppelgestängen verbunden sind. Es lässt sich somit erreichen, dass beide Sicherheitsverriegelungen sowohl oben als auch unten in den die Tür aufnehmenden Geräterahmen eingreifen, womit eine höhere Verschlusssicherheit gewährleistet werden kann. Die Türen mit der erfindungsgemäßen Doppelgestängeverriegelung und ihren oben und unten jeweils zwei Riegelköpfen lassen sich aufgrund der erreichten vier Belastungspunkte mit geringerem Gewicht ausführen. Außerdem wird eine Handhabung nach ergonomischen Gesichtspunkten möglich, denn das Betätigen der Handgriffe beim Entriegeln und das Öffnen der Tür erfolgt in derselben Bewegungsrichtung.

Wenn nach einem Vorschlag der Erfindung die Handgriffe, die nach einer bevorzugten Ausgestaltung als tastenartige Griffschalen ausgebildet sein können, zueinander unmittelbar benachbart angeordnet sind, lässt sich das Ent- und Verriegeln der Tür mit einer Hand bzw. mit einer Bewegung durchführen. Die zentrale Anordnung und Gleichheit der beiden Handgriffe bzw. Griffschalen macht den Einbau der Tür unabhängig davon, ob die Tür in dem Aufwärmgerät links oder rechts angeschlagen werden muss. Es ist zudem in jedem Fall nur eine Türausführung erforderlich, da die Tür durch Drehen für beide Ofentypen verwendbar ist. Für die erfindungsgemäße Doppel-Sicherheitsverriegelung werden auch bei unterschiedlichen Bauhöhen der Aufwärmgeräte dieselben Komponenten verwendet. Es brauchen in einfacher Weise lediglich die Einzelgestänge entsprechend kürzer oder länger zu sein.

Der Sicherheitsanspruch wird weiterhin dadurch verbessert, dass erfindungsgemäß in der Türfront optische Ver- und Entriegelungspositionsanzeiger vorgesehen sind. Es lässt sich damit eine optische Indikation erreichen, die eindeutig anzeigt, ob die Tür ver- oder entriegelt ist, z.B. durch unterschiedliche Farbkennungen wie grün und rot.

Eine bevorzugte Ausführung der Erfindung sieht vor, dass das obere und untere Doppelgestänge mit einem ersten, kürzeren Einzelgestänge und einem zweiten, längeren Einzelgestänge ausgebildet sind, von denen jeweils die kürzeren Einzelgestänge auf einer rotierbaren oberen bzw. unteren Bewegungsplatte angelenkt sind und hingegen das längere Einzelgestänge des oberen Doppelgestänges an der unteren Bewegungsplatte und das längere Einzelgestänge des unteren Doppelgestänges an der oberen Bewegungsplatte angelenkt ist. Durch die somit übergreifende Anlenkung des jeweils längeren Einzelgestänges an die rotierbare Bewegungsplatte des kürzeren Einzelgestänges des jeweils anderen Doppelgestänges ist gewährleistet, dass selbst dann, wenn nur ein Handgriff betätigt wird, von den paarweise aus der oberen und unteren Stirnseite der Tür hervorragenden Riegelköpfen sowohl oben als auch unten zumindest ein Riegelkopf in die in aufnehmende Falle des Geräterahmens einschnappt. Werden beiden Handgriffe gleichzeitig erfasst, was der Regelfall ist, lassen sich die Funktionen zur Doppelverriegelung mit oben und unten jeweils zwei Belastungspunkten, d.h. vier in die dazugehörigen Fallen eingreifenden Riegelköpfen zeitgleich einleiten.

Bei einer vorteilhaften Weiterbildung der Bewegungs- und Umlenkungskopplung wird erfindungsgemäß vorgeschlagen, dass jede rotierende Bewegungsplatte mit einem Lagerzapfen und einem Stift in eine zugeordnete Schieberplatte eingreift, wobei die Stifte und die Lagerzapfen in Kulissen geführt sind und die Schieberplatten über Gelenkhebel mit den Handgriffen bewegungsabhängig gekoppelt sind. Den Schieberplatten wird bei Betätigung der Handgriffe eine translatorische Bewegung auferlegt und auf die in der vertikalen Türebene im und gegen den Uhrzeigersinn schwenkbaren Bewegungsplatten zu deren Rotation umgelenkt, worauf die Doppelgestänge verstellt werden. In der verriegelten Position befinden sich die Handgriffe in einer in die Türfront abgesenkten Position. Zum Öffnen und damit Entriegeln werden die Handgriffe nach außen gezogen, die dann mit ihren von der Ankopplung entfernten Enden geringfügig aus der Türfront vorstehen.

Nach einer Ausgestaltung der Erfindung sind je zwei Gelenkhebel nach Art eines Parallelogrammlenkers mit Vierpunktlagerung ausgebildet, wobei zwei der Lagerpunkte als Loslager ausgeführt sind. Die Handgriffbetätigung wird somit funktionssicher und zwangsgeführt zur translatorischen Bewegung der Schieberplatten und von diesen abgeleitet zur Rotation der Bewegungsplatten übertragen, wobei die Loslager das Abheben des Handgriffes nach außen bzw. beim Öffnen Absenken nach innen ermöglichen.

Es wird hierbei erfindungsgemäß vorgeschlagen, dass der eine Gelenkhebel schmaler als der andere Gelenkhebel ausgebildet ist, beide Gelenkhebel an ihren Lagerpunkten gabelförmig mit voneinander beabstandeten Flachstegen ausgebildet sind, wobei zwischen den Flachstegen des schmaleren Gelenkhebels auf einer gemeinsamen, die dortigen Lagerpunkte bereitstellenden Achse mit einem Ankopplungskopf die Schieberplatte auf die Achse aufgesteckt ist, und beide Gelenkhebel an ihren dem Handgriff zugewandten Enden die Loslager aufweisen. Diese Ausbildung ermöglicht eine kompakte, platzsparende Bauweise im begrenzten Raum des Türinneren.

Ein weiterer Vorschlag der Erfindung sieht vor, dass die Schieberplatten an zumindest einer ihrer in der Längserstreckung verlaufenden Außenflächen mit zwei voneinander beabstandeten Rastnuten versehen sind, in die aufeinander folgend in einer geschlossenen Zwischenposition und in der verriegelten Endposition der Tür ein Rastvorsprung des Handgriff-Trägergehäuses einrastbar ist. Die bei der Handgriff-Betätigung translatorische Bewegung der Schieberplatten findet damit definierte Raststellungen, und zwar einerseits in einer Zwischenposition, in der die Tür allerdings bereits geschlossen ist, d. h. die Riegelköpfe sind schon mit einer Teillänge in die Fallen des Geräterahmens eingeschnappt, und andererseits in der verriegelten Endposition, in der die Riegelköpfe völlig in die Fallen eintauchend verstellt worden sind.

Weitere Merkmale und Einzelheiten der Erfindung ergeben sich aus den Patentansprüchen und der nachfolgenden Beschreibung eines in den Zeichnungen dargestellten Ausführungsbeispieles der Erfindung. Es zeigen:
- Fig. 1: als Einzelheit eines Aufwärmgerätes eine Tür in der Vorderansicht;
- Fig. 2: die Tür der Fig. 1 in der Seitenansicht;
- Fig. 3: die Tür der Fig. 1 in der Draufsicht;
- Fig. 4: einen Schnitt entlang der Linie IV-IV von Fig. 1;
- Fig. 5: als Einzelheit der Fig. 4 den oben eingekreisten Bereich "X";
- Fig. 6: als Einzelheit der Fig. 4 den unten eingekreisten Bereich "Y";
- Fig. 7: in vergrößerter Darstellung einen Schnitt entlang der Linie VII-VII von Fig. 1;
- Fig. 8: eine Ansicht der Tür nach Fig. 1, von der Innenseite in Richtung des Pfeils A von Fig. 2 gesehen, ohne Türverkleidung und mit in die Endlage zur Verriegelung der Tür verstellten Riegelköpfen dargestellt;
- Fig. 9: in vergrößerter Darstellung als Einzelheit den eingekreisten Bereich "Z" von Fig. 8;
- Fig. 10: die Einzelheit der Fig. 9 von der Außenseite, in Richtung des Pfeils B von Fig. 2 gesehen, unter Weglassung der Frontplatte und des zweiten Handgriffs dargestellt; und
- Fig. 11: in vergrößerter Darstellung als Einzelheit der Fig. 9 eine der rotierenden Bewegungsplatten, gegenüber Fig. 9 zur besseren Erkennbarkeit von Türverrieglungspositionen allerdings um 90° nach rechts gedreht gezeichnet, angeordnet auf einer Schieberplatte, ohne angelenkte Gestänge dargestellt, wobei die Schieberplatte an ihren Außenseiten Rastausnehmungen aufweist, denen im Handgriff-Trägerrahmen ein Rastvorsprung zugeordnet ist.

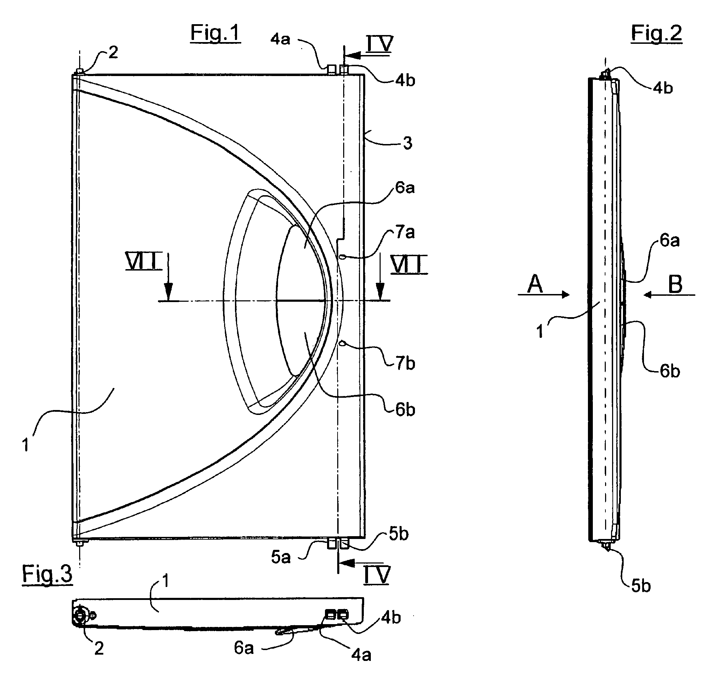

Von einem in Bordküchen von Flugzeugen hinlänglich bekannten Aufwärmgerät ist in den Fig. 1 bis 3 in verschiedenen Ansichten lediglich dessen Tür 1 dargestellt. Diese besitzt an ihrer linken Seite eine Schwenkachse 2, um die sie in einem Geräterahmen auf und zu schwenkbar ist. An der freien, aufschwingenden Seite 3 ist im Türinneren eine Verriegelungsmechanik angeordnet, die sowohl oben als auch unten zwei nebeneinander angeordnete Riegelköpfe 4a, 4b bzw. 5a, 5b aufweist. Der Verriegelungsmechanik für die Riegelköpfe 5b, 4b ist ein als tastenartige Griffschale ausgebildeter oberer Handgriff 6a und an diesen unmittelbar angrenzend für die Riegelköpfe 5a, 4a ein als ebenfalls tastenartige Griffschale ausgebildeter unterer Handgriff 6b zugeordnet. In der entriegelten Position der Tür 1 stehen die Handgriffe 6a, 6b mit ihrem freien, vorderen Ende geringfügig aus der Türfront vor, wie aus den Fig. 2 und 3 zu erkennen ist. Der ver- oder entriegelte Zustand der Tür 1 ist durch in der Türfront angeordnete optische Ver- und Entriegelungspositionsanzeiger 7a, 7b (vgl. Fig. 1) für eine Bedienungsperson sofort sichtbar.

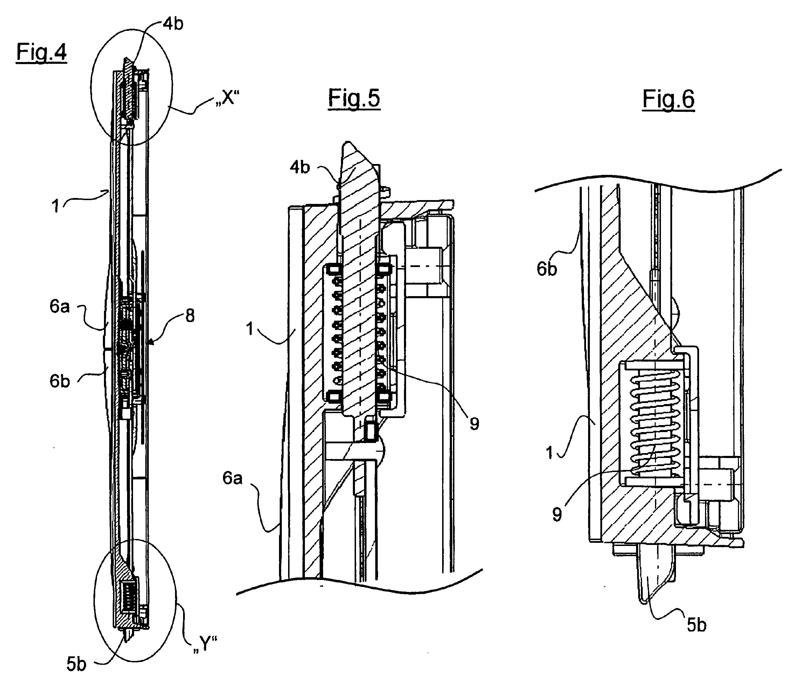

Jeder Riegelkopf 4a, 4b und 5a, 5b wird von einem Gestänge getragen, wobei die Gestänge mit zentral angeordneten Bewegungs- und Bewegungsumlenkungsgliedem 8 (vgl. Fig. 4) gekoppelt sind, die wiederum mit den Handgriffen 6a, 6b in Verbindung stehen. Bei Betätigung der Handgriffe 6a, 6b zum Entriegeln der Tür 1 werden die Riegelköpfe 4a, 4b und 5a, 5b bzw. 4a, 5a und 4b, 5b gegen die Kraft von Druckfedern 9 (vgl. die Fig. 5 und 6) aus den dazu gehörigen Fallen des nicht dargestellten Geräterahmens herausgezogen.

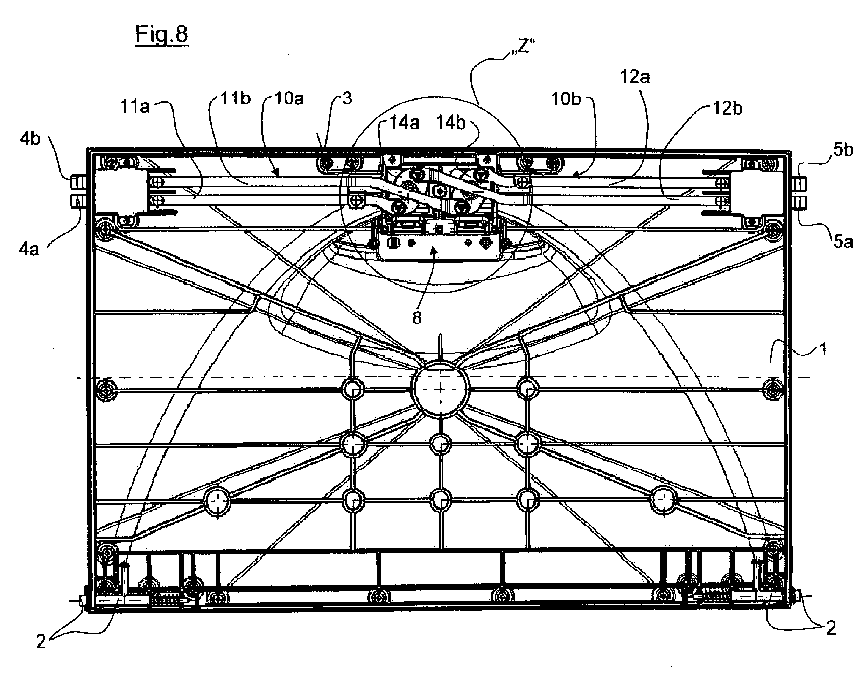

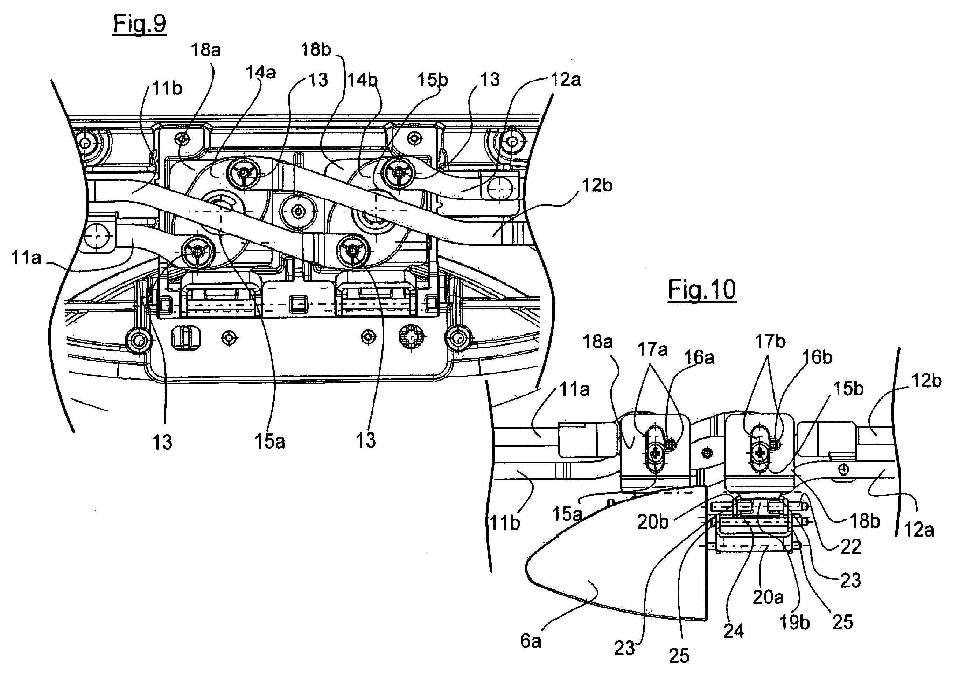

Wie der Fig. 8 zu entnehmen ist, sind die oberen und unteren Riegelköpfe 4a, 4b bzw. 5a, 5b an den außen liegenden Enden eines oberen Doppelgestänges 10a bzw. eines unteren Doppelgestänges 10b angeordnet. Hierbei besteht jedes Doppelgestänge 10a, 10b aus einem kürzeren und einem längeren Einzelgestänge 11a, 11 b bzw. 12a, 12b, die an ihren von den Riegelköpfen 4a, 4b bzw. 5a, 5b entfernten, inneren Enden an Steckachsen 13 einer rotierenden oberen Bewegungsplatte 14a und einer unteren rotierenden Bewegungsplatte 14b angelenkt sind (vgl. auch Fig. 9). Während die kürzeren Einzelgestänge 11a bzw. 12a des oberen Doppelgestänges 10a bzw. des unteren Doppelgestänges 10b an der jeweils oberen bzw. unteren rotierenden Bewegungsplatte 14a bzw. 14b angelenkt sind, übergreifen die längeren Einzelgestänge 11 b bzw. 12b die rotierende Bewegungsplatte 14a bzw. 14b und sind an der rotierenden Bewegungsplatte 14a des gegenüberliegenden oberen Doppelgestänges 10a bzw. des unteren Doppelgestänges 10b angelenkt. Die Fig. 8 zeigt die zur Verriegelung im Uhrzeigersinn verschwenkten Bewegungsplatten 14a, 14b. Zum Öffnen werden die rotierenden Bewegungsplatten 14a, 14b im Gegenuhrzeigersinn verschwenkt, so dass in der Offenposition die Riegelköpfe 4a, 4b bzw. 5a, 5b nicht mehr aus der Tür vorragen. In der geschlossenen, aber noch nicht verriegelten Position der Tür 1 nehmen die Bewegungsplatten 14a, 14b eine etwa 12-Uhr-Lage ein, in der die Riegelköpfe 4a, 4b bzw. 5a, 5b nur mit einer Teillänge aus dem Türrahmen herausgerückt sind.

Jede rotierende Bewegungsplatte 14a, 14b ist mit einem mittigen Lagerzapfen 15a, 15b und einem Stift 16a, 16b versehen (vgl. Fig. 10), die mit Bewegungsspiel in einer Kulisse 17a, 17b einer oberen Schieberplatte 18a bzw. einer unteren Schieberplatte 18b eingreifen. Beim Betätigen der Handgriffe 6a, 6b wird die davon bewirkte translatorische Bewegung der Schieberplatten 18a, 18b in eine Rotation der Bewegungsplatten 14a, 14b mit entsprechender Verstellung der Doppelgestänge 10a, 10b umgewandelt.

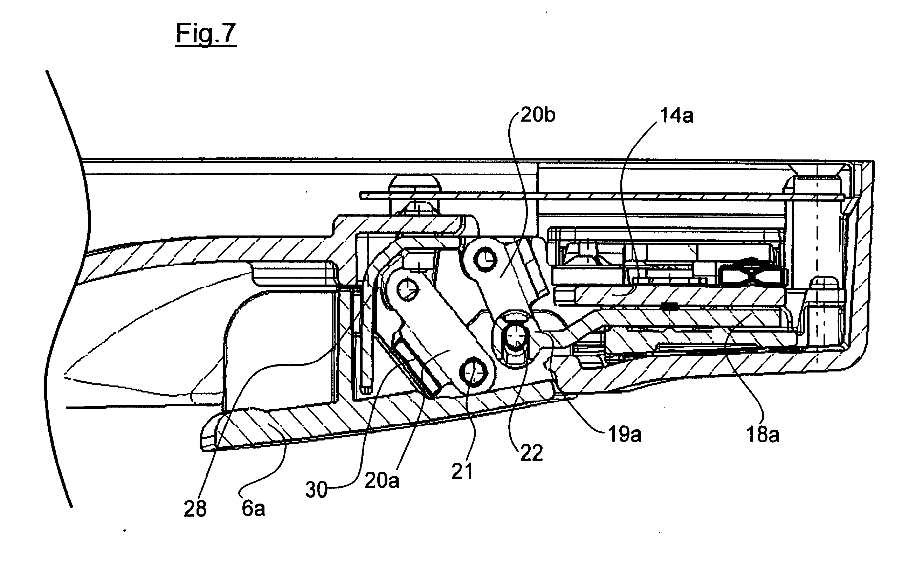

Wie der Fig. 7 anhand der Bewegungsmechanik für den oberen Handgriff 6a zu entnehmen ist, sind die Schieberplatten 18a bzw. 18b über einen Ankoppelungskopf 19a, 19b (vgl. auch Fig. 10) über jeweils zwei Gelenkhebel 20a, 20b, die nach Art eines Parallelogrammlenkers mit Vierpunktlagerung ausgebildet sind, wobei die Lagerpunkte 21 und 22 als Loslager ausgeführt sind, mit den Handgriffen 6a, 6b bewegungsabhängig gekoppelt. Die Loslager 21 und 22 ermöglichen den Parallelogrammlenkern beim Bestätigen der Handgriffe 6a, 6b einen Freiheitsgrad mit einer Zwangsführung 30 (vgl. Fig. 7) im Handgriff-Trägergehäuse 28. Die hintere Kante der Griffschalen 6a, 6b hebt sich beim Öffnen nach außen ab, um eine Kollision mit der Tür zu vermeiden und bewegt sich beim Verriegeln nach innen, so dass in der offenen, entriegelten Position der Tür die vorderen Kanten bzw. Enden der Handgriffe 6a, 6b etwas aus der Türfront vorstehen. Der Ankopplungskopf 19a, 19b der Schieberplatten 18a, 18b wird auf eine auch die Lagerpunkte für den Gelenkhebel 20b darstellende Achse 22 aufgesteckt, auf der der Gelenkhebel 20b mit gabelförmig voneinander beabstandeten Flachstegen 23 angeordnet ist. Ein solches gabelförmiges Ende mit auf einer Achse 24 angeordneten Flachstegen 25 besitzt auch der das weitere Lagerpunkt-Loslager 21 aufweisende Gelenkhebel 20a, der breiter als der Gelenkhebel 20b ist (vgl. Fig. 10).

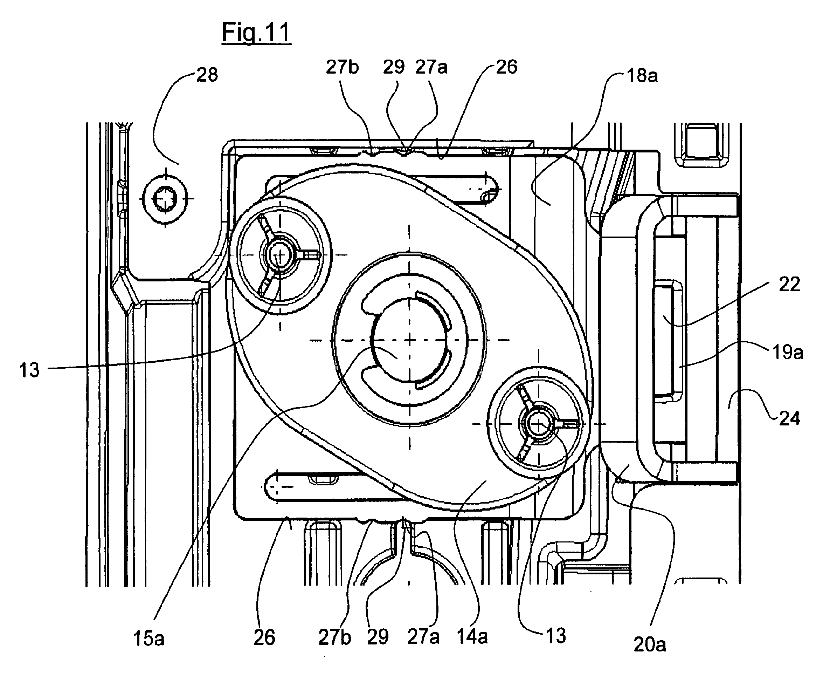

Wie in Fig. 11 am Beispiel der rotierenden Bewegungsplatte 14a dargestellt ist, sind die Schieberplatten 18a, 18b an ihren in der Längserstreckung verlaufenden Außenflächen 26 mit zwei voneinander beabstandeten Rastnuten 27a und 27b versehen, denen im umgebenden Trägergehäuse 28 der Handgriffe 6a bzw. 6b ein Rastvorsprung 29 zugeordnet ist. Wenn bei Betätigung der Handgriffe 6a, 6b die Rastvorsprünge 29 in die Rastnuten 27b eintauchen, gibt das die geschlossene, aber zunächst nur vorverriegelte Position der Tür wieder. Beim weiteren Anheben der Türgriffe 6a, 6b greifen die Rastvorsprünge 29 dann in die Rastnuten 27a ein, - wie gezeichnet - womit die endgültig verriegelte Position der Tür erreicht ist.

## Patentansprüche

1. Vorrichtung zum Verriegeln einer Tür (1) eines Aufwärmgerätes, wie von Öfen, in Küchen von Flugzeugen, bei der von Hand betätigt Verriegelungsköpfe (4a, 5a) in Fallen des Gerätegehäuses einschnappen und eine zweite Sicherheitsverriegelung vorgesehen ist,
**dadurch gekennzeichnet,**
**dass** an der freien, aufschwingenden Seite (3) der Tür (1) in deren Längserstreckung im Türinneren ein jeweils aus zwei parallel nebeneinander verlaufenden Einzelgestängen (11a, 11b; 12a, 12b) bestehendes, oberes und unteres Doppelgestänge (10a, 10b) mit an den außen liegenden Enden der Einzelgestänge oben und unten angeordneten, aus der Tür hervorragenden Riegelköpfen (4a, 4b; 5a, 5b) ausgebildet ist, wobei jedem Doppelgestänge (10a, 10b) an den von den Riegelköpfen (4a, 4b; 5a, 5b) entfernten Enden zentral in der Türfront ein Handgriff (6a, 6b) zugeordnet ist, die über Bewegungskopplungs- und -umlenkungsglieder (8) mit den Doppelgestängen (10a, 10b) verbunden sind.

2. Vorrichtung nach Anspruch 1,
**dadurch gekennzeichnet,**
**dass** das obere und untere Doppelgestänge (10a, 10b) mit einem ersten, kürzeren Einzelgestänge (11a, 12a) und einem zweiten, längeren Einzeigestänge (11 b, 12b) ausgebildet sind, von denen jeweils die kürzeren Einzelgestänge (11a, 12a) auf einer rotierbaren oberen bzw. unteren Bewegungsplatte (14a, 14b) angelenkt sind und hingegen das längere Einzelgestänge (11b) des oberen Doppelgestänges (10a) an der unteren Bewegungsplatte (14b) und das längere Einzelgestänge (12b) des unteren Doppelgestänges (10b) an der oberen Bewegungsplatte (14a) angelenkt ist.

3. Vorrichtung nach Anspruch 2,
**dadurch gekennzeichnet,**
**dass** jede rotierende Bewegungsplatte (14a, 14b) mit einem Lagerzapfen (15a, 15b) und einem Stift (16a, 16b) in zugeordnete Schieberplatten (18a, 18b) eingreift, wobei die Stifte (16a, 16b) und die Lagerzapfen (15a, 15b) in Kulissen (17a, 17b) geführt sind und die Schieberplatten (18a, 18b) über Gelenkhebel (20a, 20b) mit den Handgriffen (6a, 6b) bewegungsabhängig gekoppelt sind.

4. Vorrichtung nach Anspruch 3,
**dadurch gekennzeichnet,**
**dass** je zwei Gelenkhebel (20a, 20b) nach Art eines Parallelogrammlenkers mit Vierpunktlagerung ausgebildet sind, wobei zwei der Lagerpunkte als Loslager (21 und 22) ausgeführt sind.

5. Vorrichtung nach Anspruch 4,
**dadurch gekennzeichnet,**
**dass** der eine Gelenkhebel (20b) schmaler als der andere Gelenkhebel (20a) ausgebildet ist, beide Gelenkhebel (20a, 20b) an ihren Lagerpunkten gabelförmig mit voneinander beabstandeten Flachstegen (23, 25) ausgebildet sind, wobei zwischen den Flachstegen (23) des schmaleren Gelenkhebels (20b) auf einer gemeinsamen, die dortigen Lagerpunkte bereitstellenden Achse (22) mit einem Ankopplungskopf (19a, 19b) die Schieberplatte (18a, 18b) auf die Achse (22) aufgesteckt ist, und der andere Gelenkhebel (20a) an seinem dem Handgriff (6a, 6b) zugewandten Ende das Loslager (21) aufweist.

6. Vorrichtung nach Anspruch 1,
**dadurch gekennzeichnet,**
**dass** die Handgriffe (6a, 6b) tastenartig ausgebildet sind.

7. Vorrichtung nach Anspruch 6,
**dadurch gekennzeichnet,**
**dass** die Handgriffe (6a, 6b) zueinander unmittelbar benachbart angeordnet sind.

8. Vorrichtung nach Anspruch 1,
**dadurch gekennzeichnet,**
**dass** die Schieberplatten (18a, 18b) an zumindest einer ihrer in der Längserstreckung verlaufenden Außenflächen (26) mit zwei voneinander beabstandeten Rastnuten (27a, 27b) versehen sind, in die aufeinander folgend in einer ersten geschlossenen Zwischenposition und in der verriegelten Endposition der Tür (1) ein Rastvorsprung (29) des Handgriff-Trägergehäuses (28) einrastbar ist.

9. Vorrichtung nach Anspruch 8,
**dadurch gekennzeichnet,**
**dass** in der Türfront optische Ver- und Entriegelungspositionsanzeiger (7a, 7b) vorgesehen sind.

## Claims

1. A device for locking a door (1) of a heating device such as an oven in galleys of aircraft, wherein manually actuated locking heads (4a, 5a) snap in two catches of the device housing and a second safety lock is provided,
**characterized in**
**that** an upper and a lower double rod assembly (10a, 10b) that respectively consist of two parallel and adjacently extending individual rod assemblies (11 a, 11b; 12a, 12b) and feature interlocking heads (4a, 4b; 5a, 5b) that are arranged on the top and the bottom of the outer ends of the individual rod assemblies and protrude from the door are respectively realized in the interior of the door on the free side (3) of the door (1) that swings open in the longitudinal direction thereof, wherein a handle (6a, 6b) is assigned to each double rod assembly (10a, 10b) centrally in the front of the door on the distant ends referred to the interlocking heads (4a, 4b; 5a, 5b), and wherein said handles are connected to the double rod assemblies (10a, 10b) by means of motion coupling and deflecting elements (8).

2. The device according to Claim 1,
**characterized in**
**that** the upper and the lower double rod assembly (10a, 10b) are realized with a first, shorter individual rod assembly (11a, 12a) and a second, longer individual rod assembly (11 b, 12b), wherein the respective shorter individual rod assemblies (11 a, 12a) are respectively coupled to rotatable upper and lower motion plates (14a, 14b) while the longer individual rod assembly (11 b) of the upper double rod assembly (10a) is coupled to the lower motion plate (14b) and the longer individual rod assembly (12b) of the lower double rod assembly (10b) is coupled to the upper motion plate (14a).

3. The device according to Claim 2,
**characterized in**
**that** each rotating motion plate (14a, 14b) engages into assigned sliding plates (18a, 18b) with a journal (15a, 15b) and a pin (16a, 16b), wherein the pins (16a, 16b) and the journals (15a, 15b) are guided in connecting links (17a, 17b) and the sliding plates (18a, 18b) are coupled to the handles (6a, 6b) in dependence on the motion by means of articulated levers (20a, 20b).

4. The device according to Claim 3,
**characterized in**
**that** two articulated levers (20a, 20b) are respectively realized in the form of parallelogram guide rods with four-point bearing, wherein two of the bearing points are realized in the form of movable bearings (21 and 22).

5. The device according to Claim 4,
**characterized in**
**that** one articulated lever (20b) is narrower than the other articulated lever (20a) and both articulated levers (20a, 20b) are realized in a forkshaped fashion with spaced-apart flat webs (23, 25) at their bearing points, wherein the sliding plate (18a, 18b) is attached by means of a coupling head (19a, 19b) to a shaft (22) between the flat webs (23) of the narrower articulated lever (20b) on said common shaft (22) that makes available the bearing points at this location, and wherein the other articulated lever (20a) features the movable bearing (21) on its end that faces the handle (6a, 6b).

6. The device according to Claim 1,
**characterized in**
**that** the handles (6a, 6b) are realized in a pushbutton-like fashion.

7. The device according to Claim 6,
**characterized in**
**that** the handles (6a, 6b) are arranged directly adjacent to one another.

8. The device according to Claim 1,
**characterized in**
**that** the sliding plates (18a, 18b) are provided with two spaced-apart catch grooves (27a, 27b) on at least one of their outer surfaces (26) that extends in the longitudinal direction, wherein a snap-in projection (29) of the handle carrier housing (28) can be successively engaged into said catch grooves in a first, closed intermediate position and in the locked end position of the door (1).

9. The device according to Claim 8,
**characterized in**
**that** optical locking and unlocking position indicators (7a, 7b) are provided in the front of the door.

## Revendications

1. Dispositif de verrouillage d'une porte (1) d'un appareil de réchauffage, tel que des fours dans des cuisines d'avions, sur lequel des têtes de verrouillage (4a, 5a) actionnées manuellement s'enclenchent dans des loquets du corps de l'appareil et il est prévu un deuxième verrouillage de sécurité,
**caractérisé en ce que** sur les côtés libres (3) oscillant en ouverture de la porte (1), dans sa direction longitudinale, à l'intérieur de la porte est conçue une double tringle (10a, 10b) supérieure et inférieure, constituée chaque fois de deux tringles individuelles (11a, 11b ; 12a, 12b) s'étendant à la parallèle côte à côte, avec des têtes de verrouillage (4a, 4b ; 5a, 5b) disposées en haut et en bas sur les extrémités situées à l'extérieur des tringles individuelles, saillant hors de la porte, à chaque double tringle (10a, 10b) étant associée sur les extrémités éloignées des têtes de verrouillage (4a, 4b ; 5a, 5b) au centre, dans la partie frontale de la porte une manette (6a, 6b) qui est reliée aux doubles tringles (10a, 10b) par des organes de couplage et de renvoi du mouvement (8).

2. Dispositif selon la revendication 1, **caractérisé en ce que** la double tringle (10a, 10b) supérieure et inférieure sont conçues avec une première tringle individuelle (11a, 12a) plus courte et avec une seconde tringle individuelle (11b, 12b) plus longue, dont chaque fois les tringles individuelles (11a, 12a) plus courtes sont articulées sur un plateau de déplacement (14a, 14b) inférieur ou supérieur rotatif alors qu'en revanche, la tringle individuelle (11 b) la plus longue de la double tringle (10a) supérieure est articulée sur le plateau de déplacement (14b) et la tringle individuelle (12b) la plus longue de la double tringle (10b) inférieure est articulée sur le plateau de déplacement (14a) supérieur.

3. Dispositif selon la revendication 2, **caractérisé en ce que** chaque plateau de déplacement (14a, 14b) rotatif s'engage par un tourillon (15a, 15b) et par une tige (16a, 16b) dans des plaques glissières (18a, 18b) associées, les tiges (16a, 16b) et les tourillons (15a, 15b) étant guidés dans des coulisses (17a, 17b) et les plaques glissières (18a, 18b) étant accouplées par l'intermédiaire de leviers articulés (20a, 20b) aux manettes (6a, 6b), en fonction du déplacement.

4. Dispositif selon la revendication 3, **caractérisé en ce que** chaque fois deux leviers articulés (20a, 20b) sont conçus à la manière d'une bielle en parallélogramme avec palier à quatre points, deux des points de palier étant conçus en tant que palier libre (21 et 22).

5. Dispositif selon la revendication 4, **caractérisé en ce que** l'un des leviers articulés (20b) est conçu en version plus étroite que l'autre levier articulé (20a), **en ce que** deux leviers articulés (20a, 20b) sont conçus en forme de fourche sur leurs points de palier, avec des listels plats (23, 25) écartés l'un de l'autre, entre les listels plats (23) du levier articulé (20b) plus étroit, sur un axe (22) commun, mettant à disposition les points de palier de l'endroit par une tête d'accouplement (19a, 19b) la plaque glissière (18a, 18b) étant emboîtée sur l'axe (22) et **en ce que** sur son extrémité faisant face à la manette (6a, 6b), l'autre levier articulé (20a) comporte le palier libre (21).

6. Dispositif selon la revendication 1, **caractérisé en ce que** les manettes (6a, 6b) sont conçues à la manière de touches.

7. Dispositif selon la revendication 6, **caractérisé en ce que** les manettes (6a, 6b) sont disposées au voisinage direct l'une de l'autre.

8. Dispositif selon la revendication 1, **caractérisé en ce que** sur au moins l'une de leurs surface extérieures (26) s'étendant dans l'extension longitudinale, les plaques glissières (18a, 18b) sont munies de deux rainures d'enclenchement (27a, 27b) écartées l'une de l'autre, dans lesquelles, successivement, dans une première position intermédiaire fermée et dans la position finale verrouillée de la porte (1), une saillie d'enclenchement (29) du boîtier support de manette (28) peut s'enclencher.

9. Dispositif selon la revendication 8, **caractérisé en ce que** dans la partie frontale de la porte sont prévus des afficheurs optiques de la position de verrouillage et de déverrouillage (7a, 7b).
